# EUROPÄISCHE PATENTSCHRIFT

(11) **EP 0 917 973 B1**
(45) Veröffentlichungstag und Bekanntmachung des Hinweises auf die Patenterteilung: **30.05.2007**
(21) Anmeldenummer: 98119720.5
(22) Anmeldetag: 20.10.1998
(51) Int. Cl.: B60H 1/00

(54) **Heizungs- und/oder Klimaanlage für ein Fahrzeug, insbesondere für einen Personenkraftwagen**
Heating and/or air conditioning device for vehicle, especially for passenger motor vehicle
Dispositif de chauffage et/ou de climatisation pour véhicule, en particulier pour véhicule de passagers

(30) Priorität: 21.11.1997 DE 19751652
(43) Veröffentlichungstag der Anmeldung: 26.05.1999
(73) Patentinhaber: Behr GmbH & Co. KG, 70469 Stuttgart (DE)
(72) Erfinder: Derleth, Martin Dipl.-Ing. (FH), 74523 Schwäbisch Hall-Suzdorf (DE); Luz, Klaus Dipl.-Ing., 71083 Herrenberg (DE); Hizli, Adam Dipl.-Ing. (FH), 70376 Stuttgart (DE)

(56) Entgegenhaltungen:
- DE-A- 4 445 380
- FR-A- 2 667 829
- US-A- 5 545 085

## Beschreibung

Die Erfindung betrifft eine Heizungs- und/oder Klimaanlage eines Fahrzeugs mit einer Instrumententafel, insbesondere eines Personenkraftwagens, mit einem vorzugsweise einen Verdampfer enthaltenden Gebläsegehäuse und mit einem einen Heizkörper enthaltenden Verteilgehäuse, die im Bereich vor einer Instrumententafel anordenbar sind.

Heizungs- und/oder Klimaanlagen sind üblicherweise in Fahrzeugen vor und unterhalb der Instrumententafel eingebaut. Sie sind deshalb nach der Erstmontage für eine Nachrüstung mit einem Verdampfer oder für einen Austausch von Komponenten und insbesondere von Heizkörper und Verdampfer nur schwer zugänglich. Es sind umfangreiche Demontagearbeiten notwendig, wenn derartige Arbeiten erforderlich sind. Üblicherweise ist ferner nach dem Verteilgehäuse noch eine Mischkammer innerhalb des Armaturenbrettes angeordnet, von der Leitungen zu Mitteldüsen, Seitendüsen, Fußraumdüsen und Defrosterdüsen sowie zu Leitungen zum Fond des Fahrzeuges anschließen.

Es ist bekannt (EP-B 566 474), ein säulenförmiges Mischgehäuse im Fahrzeuginnenraum vor einer vereinfachten, bandförmigen Instrumententafel anzuordnen. Das Verteilgehäuse und das Gebläsegehäuse sind auch bei dieser Bauart vor und unterhalb der Instrumententafel angeordnet, so daß Heizkörper und Verdampfer ebenfalls nur schwer zugänglich sind.

Der Erfindung liegt die Aufgabe zugrunde, eine Heizungs- und/oder Klimaanlage der eingangs genannten Art so auszubilden, daß die Zugänglichkeit zu den einzelnen Elementen dieser Heizungs- und/oder Klimaanlage verbessert wird, so daß für einen Austausch oder für eine Nachrüstung mit einem Verdampfer die erforderlichen Demontagearbeiten wesentlich geringer sind.

Diese Aufgabe wird dadurch gelöst, daß das Verteilgehäuse in Richtung zu dem Fahrzeuginnenraum hin von dem Gebläsegehäuse trennbar ist, und daß das Verteilgehäuse in Richtung zum Fahrzeuginnenraum hin einen Vorbau aufweiset, der eine Aussparung der Instrumententafel ausgefüllt, durch welche das Verteilgehäuse ausbaubar ist.

Die Erfindung sieht somit vor, daß der Vorbau des Verteilgehäuses den durch die Aussparung entfallenden Teil der Instrumententafel ersetzt und etwa in die Kontur des übrigen Teils der Instrumententafel ragt. Das Verteilgehäuse ist somit ohne Demontage der Instrumententafel zugänglich und nach Lösen der Verbindung zu dem Gebläsegehäuse und Lösen von Anschlüssen zu dem Heizkörper in einfacher Weise zu dem Fahrzeuginnenraum hin ausbaubar. Die in dem Verteilgehäuse untergebrachten Elemente sind danach gut zugänglich. Auch das Gebläsegehäuse ist nach Entfernen des Verteilgehäuses gut zugänglich, so daß beispielsweise der in dem Gebläsegehäuse befindliche Verdampfer ausgetauscht werden kann. Ebenso ist es möglich, dann in das Gebläsegehäuse nachträglich einen Verdampfer einzubauen, so daß eine Heizungsanlage zu einer Klimaanlage nachgerüstet werden kann.

In vorteilhafter Ausgestaltung der Erfindung wird vorgesehen, daß der Vorbau aus an das Verteilgehäuse angeformten Elementen besteht. Dadurch läßt sich der Vorbau in einfacher Weise zusammen mit dem Verteilgehäuse herstellen, insbesondere als Spritzgußteile.

In weiterer Ausgestaltung der Erfindung wird vorgesehen, daß der Vorbau als eine Luftmischeinrichtung ausgebildet ist. Diese Luftmischeinrichtung, die Anschlüsse zu den in den Fahrzeuginnenraum führenden Luftdüsen und Mischklappen o.dgl. enthält, ist somit in das Verteilgehäuse und den Vorbau integriert. Besonders vorteilhaft ist es dabei, wenn der Vorbau mit Luftaustrittsstutzen versehen ist, an die Mitteldüsen unmittelbar anschließbar sind, die dann in den Vorbau integriert sind.

In weiterer Ausgestaltung der Erfindung wird vorgesehen, daß der Vorbau mit wenigstens einer Aufnahme für eine Instrument oder für Bedienungselemente versehen ist. Der Vorbau kann somit als Halterung für ein oder mehrere Instrumente und insbesondere für die Bedienungselemente der Heizungs- und/oder Klimaanlage ausgenutzt werden, so daß für diese Teile keine gesonderten Halterungen in der Instrumententafel vorgesehen werden müssen.

In weiterer Ausgestaltung der Erfindung wird vorgesehen, daß der Vorbau mit einer Blende abgedeckt ist, die die Fugen zwischen der Aussparung der Instrumententafel und dem Vorbau des Verteilgehäuses abdeckt. Diese Blende kann in einfacher Weise an das Design und/oder die Farbe der Instrumententafel angepaßt werden, so daß ein einheitliches Aussehen im Bereich der Instrumententafel erzielbar ist.

In vorteilhafter Weiterbildung wird vorgesehen, daß die Blende als eine Mittelkonsole gestaltet ist. Damit wird der Blende außer der dekorativen Funktion noch eine technische Funktion gegeben.

In weiterer Ausgestaltung der Erfindung wird vorgesehen, daß der Vorbau mit elektrischen Steckanschlüssen versehen ist, an die Stecker eines Instrumentes oder eines Bedienungselementes anschließbar sind. Dadurch läßt sich die Montage oder Demontage von Instrumenten, beispielsweise eines Radios oder eines Navigationssystems o.dgl., in einfacher Weise verwirklichen. In ebenso einfacher Weise lassen sich Bedienungselemente montieren und demontieren, insbesondere die Bedienungselemente für die Heizungs- und/oder Klimaanlage.

Weitere Merkmale und Vorteile der Erfindung ergeben sich aus der nachfolgenden Beschreibung der in der Zeichnung dargestellten Ausführungsform.
- Fig. 1: zeigt eine perspektivische Ansicht eines Teils einer erfindungsgemäßen Heizungs- und/oder Klimaanlage in zusammengebautem Zustand,
- Fig. 2: eine Explosions-Darstellung der Elemente des Teils der Heizungs- und/oder Klimaanlage der Fig. 1 und
- Fig. 3: einen Längsschnitt in schematischer Darstellung durch eine in ein Fahrzeug eingebaute erfindungsgemäße Heizungs- und/oder Klimaanlage.

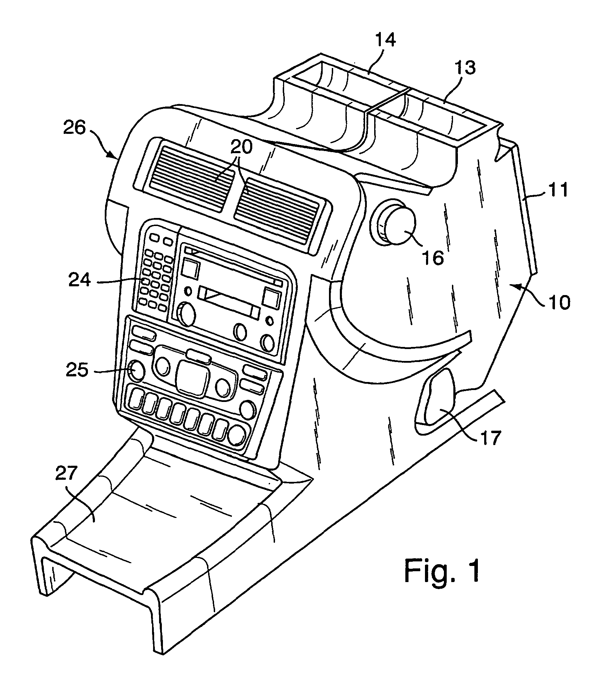

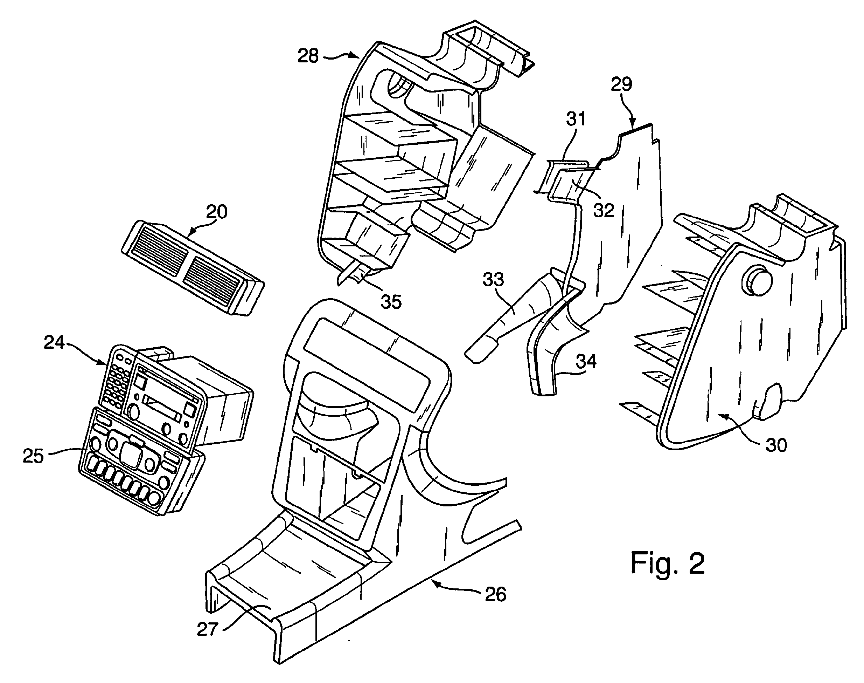

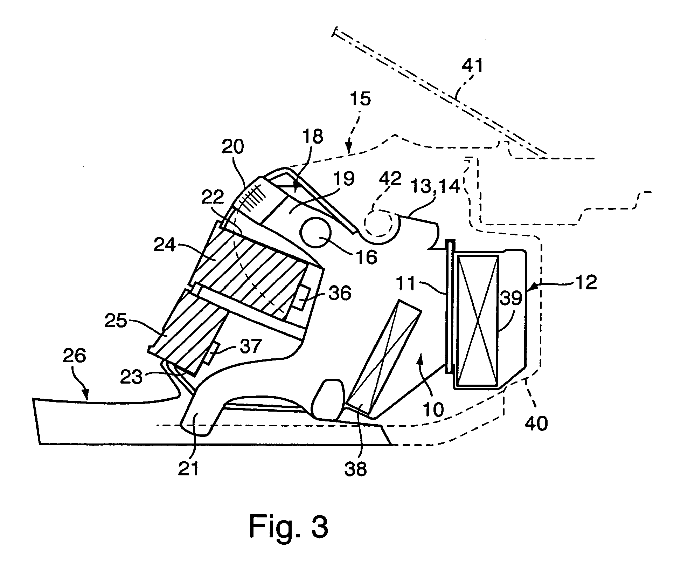

Der in Fig. 1 und 2 dargestellte Teil einer Heizungs- oder Klimaanlage, der in der Fahrzeuglängsmitte angeordnet wird, enthält ein Verteilgehäuse 10, das mit einem Flansch 11 an ein Gebläsegehäuse 12 anschließt, das nur in Fig. 3 dargestellt ist. Das Verteilgehäuse 10 ist einteilig mit einer Luftmischeinrichtung ausgebildet, die Anschlüsse 13, 14 für Defrosterdüsen, aufweist, die in einer Instrumententafel 15 angeordnet sind, wie in Fig. 3 angedeutet ist. Die Mischeinrichtung besitzt ferner obere seitliche Anschlüsse 16, an die Seitendüsen über Verbindungsleitungen angeschlossen sind, die im Bereich der beiden Fahrzeugseiten in der Instrumententafel 15 angeordnet sind. Ferner sind untere Anschlüsse 17 vorgesehen, die zu Fußdüsen im Fußraum des Fahrzeuges führen.

Das Verteilgehäuse 10 ist mit einem Vorbau 18 versehen, der die Luftmischeinrichtung enthält und der sich bis in die Kontur der Instrumententafel 15 und darüber hinaus erstreckt, die in Fig. 3 angedeutet ist. Der Vorbau 18 enthält zwei obere Luftkanäle 19, an die direkt Mittelluftdüsen 20 angesetzt sind. Ferner enthält der Vorbau untere Luftkanäle 21, die Anschlüsse für nicht dargestellte Leitungen zu dem Fond des Fahrzeuges bilden.

Ferner enthält der Vorbau 18 Aufnahmen 22, 23, die Instrumente oder Bedienungselemente aufnehmen. Bei dem Ausführungsbeispiel dient die obere Aufnahme 22 beispielsweise zum Aufnehmen eines Radios 24. Die untere Aufnahme 23 dient beispielsweise zur Aufnahme der als ein Modul 25 gestalteten Bedienelemente für die Heizungs- und Klimaanlage.

Der Vorbau 18 ist mit einer Blende 26 abgedeckt, die die Außenkontur einer Mittelkonsole bildet. Die oberen Ränder der Blende 26 decken die Aussparung der Instrumententafel ab. Dabei können sie in nicht dargestellter Weise mit dichtlippenartigen Randstreifen versehen sein. Ferner besitzt die Blende 26 fensterartige Aussparungen für die Mitteldüsen 20, für das Radio 24 und den Modul 25 der Bedienelemente. An die Blende 26, die vorteilhaft als ein Kunststoffspritzteil hergestellt wird, ist ferner eine nach innen in den Fahrzeuginnenraum zwischen Fahrer und Beifahrer hineinragende Ablage 27 angeformt. Die Blende ist auch nach vorne unterhalb der Instrumententafel 15 verlängert, so daß sie in der Fahrzeugmitte eine Mittelkonsole darstellt.

Wie aus Fig. 2 zu ersehen ist, besteht das Verteilgehäuse 10 einschließlich Vorbau aus drei Kunststofformteilen, nämlich einem linken Seitenteil 28, einem Mittelteil 29 und einem spiegelbildlich zu dem linken Mittelteil ausgebildeten rechten Teil 30. Die linken und rechten Seitenteile 28, 30 werden in bekannter Weise mittels Nut-Feder-Verbindung mit dem Mittelteil 29 verbunden. An das Mittelteil 29 sind Ansätze 31 angeformt, die mit zugeordneten Formteilen der Seitenteile die zu den Mitteldüsen 20 führenden Luftkanäle 19 bilden. An das Mittelteil 29 sind weitere schalenförmige Ansätze 33, 34 angeformt, die mit Ansätzen 35 der Seitenteile 29, 30 jeweils die Kanäle 21 zum Anschließen von Leitungen für den Fondbereich bilden.

Die Aufnahmen 22, 23 sind aus von den Seitenteilen 28, 30 abragenden Stegen gebildet, die aneinander anstoßen können, jedoch nicht müssen. Die den Vorbau abdeckende Blende ist ein Kunststofformteil, das mit den fensterartigen Aussparungen für die Mitteldüsen 20, das Radio 24 und den Modul 25 der Bedienelemente ausgerüstet ist. Bevorzugt wird vorgesehen, daß die Aufnahmen 22, 23 die entsprechenden Elemente nur aufnehmen, während die Lagesicherung und Verriegelung an der Blende 26 durch entsprechende Verrastungen erfolgt.

Wie noch aus Fig. 3 zu ersehen ist, sind an den Aufnahmen 22, 23 elektrische Steckanschlüsse 36, 37 vorgesehen, mit denen das Radio 24 und der Modul 25 der Bedienelemente beim Einsetzen in die entsprechenden Aufnahmen 22, 23 elektrisch angeschlossen wird.

Das Verteilgehäuse 10 enthält einen als Heizkörper 38 dienenden Wärmeübertrager, der in nicht näher dargestellter Weise mittels trennbarer Anschlüsse an den Kühlmittelkreislauf eines Verbrennungsmotors des Kraftfahrzeuges angeschlossen ist. Das Gebläsegehäuse 12 enthält, sofern eine Klimaanlage betroffen ist, einen als Verdampfer 39 ausgebildeten Wärmeübertrager, der an einen Kältemittelkreislauf angeschlossen ist. Das Gebläsegehäuse 12 ist mit einem Flansch versehen, mit dem es dichtend mit dem Flansch 11 des Verteilgehäuses 10 verbunden ist. Beispielsweise weist der Flansch des Gebläsegehäuses 12 hakenförmige Befestigungselemente auf, die im oberen Bereich den Flansch 11 des Verteilgehäuses 10 umgreifen. Im übrigen Bereich können die beiden Flansche mittels Klammern oder Schrauben dichtend miteinander verbunden sein.

Das Gebläsegehäuse 12 ist stationär in dem Fahrzeug angeordnet, von welchem außer der Instrumententafel 15 eine Spritzwand 40 und eine Windschutzscheibe 41 angedeutet sind. Das Verteilgehäuse 10 mit dem Vorbau 18 und den Einbauelementen ist beispielsweise an einem Querträger 42 des Fahrzeuges befestigt, der sich im Bereich der Anschlüsse 13, 14 für die Defrosterdüsen befindet. Nach Lösen der Verbindungen mit dem Gebläsegehäuse 12 und nach Lösen der Befestigungen an dem Querträger 42 kann das Verteilgehäuse 10 mitsamt dem Vorbau 18 und den daran angebrachten Elementen 20, 24, 25 einschließlich der Blende 26 aus der Instrumententafel 15 in Richtung zu dem Fahrzeuginnenraum des nicht näher dargestellten Fahrzeuges ausgebaut werden. Selbstverständlich sind Anschlüsse zur Heizung sowie zu den Seitendüsen und Fußdüsen und den Fonddüsen vorher zu lösen. Gegebenenfalls müssen auch noch Befestigungsmittel der als Mittelkonsole dienenden Blende gelöst werden. Diese Arbeiten sind jedoch relativ einfach durchzuführen, so daß der Demontageaufwand entsprechend gering ist. Nach Ausbau der Baugruppe aus Verteilgehäuse 10 und Vorbau 18 sind nicht nur die Elemente dieser Baugruppe für eine Wartung oder einen Austausch zugänglich, sondern auch das Gebläsegehäuse 12. Es ist dann relativ einfach möglich, den Verdampfer 39 auszutauschen oder ggf. einen Verdampfer 39 erst einzubauen, um eine Heizungsanlage auf eine Klimaanlage umzurüsten.

Die Erfindung ist natürlich nicht auf das dargestellte Ausführungsbeispiel beschränkt. Der Vorbau 18 kann beispielsweise weitere Aufnahmen beispielsweise auch für alle Instrumente enthalten, so daß die Instrumententafel 15 keine Halterungen aufweist und weitgehend nur eine Schutzfunktion für die Fahrzeuginsassen erfüllen muß. Darüber hinaus ist es auch möglich, die Blende 26 abweichend zu gestalten. Insbesondere ist es möglich, in der Blende seitlich von den Luftdüsen 20 und von dem Radio 24 einen Ansatz anzubringen, der beispielsweise als Handschuhfach dient oder auch als Einrichtung zum Aufnehmen eines Airbags. Da der Vorbau 18 des Verteilgehäuses 10 mittels der Blende 26 zum Fahrgastraum eines Fahrzeuges abgedeckt ist, kann der Vorbau auch als eine Rahmen- oder Gitterkonstruktion gestaltet werden.

## Patentansprüche

1. Heizungs- und/oder Klimaanlage eines Fahrzeugs mit einer Instrumententafel (15), insbesondere eines Personenkraftwagens, mit einem vorzugsweise einen Verdampfer (39) enthaltenden Gebläsegehäuse (12) und mit einem einen Heizkörper (38) enthaltenden Verteilgehäuse (10), die im Bereich vor der Instrumententafel des Fahrzeuges anordenbar sind, **dadurch gekennzeichnet, dass**
das Verteilgehäuse (10) in Richtung zum Fahrzeuginnenraum hin von dem Gebläsegehäuse (12) trennbar ist, und dass das Verteilgehäuse in Richtung zum Fahrzeuginnenraum hin einen Vorbau (18) aufweist, der eine Aussparung der Instrumententafel (15) ausfüllt, durch welche das Verteilgehäuse ausbaubar ist.

2. Heizungs- und/oder Klimaanlage nach Anspruch 1, **dadurch gekennzeichnet, dass** der Vorbau (18) aus an das Verteilgehäuse (10) angeformten Elementen besteht.

3. Heizungs- und/oder Klimaanlage nach Anspruch 1 oder 2, **dadurch gekennzeichnet, dass** der Vorbau (18) als eine Luftmischeinrichtung ausgebildet ist.

4. Heizungs- und/oder Klimaanlage nach einem der Ansprüche 1 bis 3, **dadurch gekennzeichnet, dass** der Vorbau (18) mit Luftaustrittsstutzen (19) versehen ist, an die Mitteldüsen (20) unmittelbar anschließbar sind.

5. Heizungs- und/oder Klimaanlage nach einem der Ansprüche 1 bis 4, **dadurch gekennzeichnet, dass** der Vorbau (18) mit Luftaustrittsstutzen (21) versehen ist, an die zum Fondraum des Fahrzeuges führenden Leitungen anschließbar sind.

6. Heizungs- und/oder Klimaanlage nach einem der Ansprüche 1 bis 5, **dadurch gekennzeichnet, dass** der Vorbau (18) mit wenigstens einer Aufnahme (22, 23) für ein Instrument (24) oder für Bedienungselemente (25) versehen ist.

7. Heizungs- und/oder Klimaanlage nach einem der Ansprüche 1 bis 6, **dadurch gekennzeichnet, dass** der Vorbau (18) mit einer Blende (26) abgedeckt ist, die die Fugen zwischen der Aussparung der Instrumententafel (15) und dem Vorbau (18) des Verteilgehäuses (10) abdeckt.

8. Heizungs- und/oder Klimaanlage nach Anspruch 7, **dadurch gekennzeichnet, dass** die Blende (26) als eine Mittelkonsole gestaltet ist.

9. Heizungs- und/oder Klimaanlage nach einem der Ansprüche 1 bis 8, **dadurch gekennzeichnet, dass** der Vorbau (18) mit elektrischen Steckanschlüssen (36, 37) versehen ist, an die Stecker eines Instrumentes (24) oder eines Bedienungselementes (25) anschließbar sind.

10. Heizungs- und/oder Klimaanlage nach einem der Ansprüche 1 bis 9, **dadurch gekennzeichnet, dass** das Verteilgehäuse (10) und der Vorbau (18) aus Kunststoffspritzteilen zusammengefügt sind, die als zwei Seitenteile (28, 30) und ein Mittelteil (29) gestaltet sind.

## Claims

1. A heating and/or air conditioning device for a vehicle with an instrument panel (15), in particular for a passenger motor vehicle, having a fan housing (12) which preferably contains an evaporator (39) and a distribution housing (10) which contains a heating element (38) which can all preferably be positioned in front of the instrument panel of the vehicle,
**characterised in that**
the distribution housing (10) can be separated from the fan housing (12) in the direction of the interior of the vehicle and the distribution housing (10) has a front part (18) on the side of the vehicle interior which fills a recess in the instrument panel (15) through which the distribution housing (10) can be removed.

2. A heating and/or air conditioning device in accordance with claim 1,
**characterised in that**
the front part (18) consists of elements which are moulded to the distribution housing (10).

3. A heating and/or air conditioning device in accordance with claim 1 or 2,
**characterised in that**
the front part (18) is designed as an air mixing device.

4. A heating and/or air conditioning device in accordance with one of claims 1 to 3,
**characterised in that**
the front part (18) is provided with air discharge connectors (19) to which central outlets (20) can be connected directly.

5. A heating and/or air conditioning device in accordance with one of claims 1 to 4,
**characterised in that**
the front part (18) is provided with air discharge connectors (21) to which it is possible to connect lines leading to the rear area of the vehicle.

6. A heating and/or air conditioning device in accordance with one of claims 1 to 5,
**characterised in that**
the front part (18) is provided with at least one receiver (22, 23) for an instrument (24) or for operating controls (25).

7. A heating and/or air conditioning device in accordance with one of claims 1 to 6,
**characterised in that**
the front part (18) is covered by a shield (26) which covers the joins between the recess in the instrument panel (15) and the front part (18) of the distribution housing (10).

8. A heating and/or air conditioning device in accordance with claim 7,
**characterised in that**
the shield (26) takes the form of a central console.

9. A heating and/or air conditioning device in accordance with one of claims 1 to 8,
**characterised in that**
the front part (18) is provided with electrical plug-type connectors (36, 37) to which it is possible to connect plugs of an instrument (24) or an operating control (25).

10. A heating and/or air conditioning device in accordance with one of claims 1 to 9
**characterised in that**
the distribution housing (10) and the front part (18) are made of moulded plastic parts which take the form of two lateral parts (28, 30) and one central part (29).

## Revendications

1. Système de chauffage et/ou de climatisation pour un véhicule avec un tableau de bord (15), en particulier une voiture, avec un carter de soufflante (12) comprenant préférentiellement un évaporateur (39) et avec un carter répartiteur (10) comprenant un radiateur (38), disposables dans l'espace devant le tableau de bord du véhicule, **caractérisé en ce que** le carter répartiteur (10) est séparable du carter de soufflante (12) vers l'intérieur du véhicule, et **en ce que** le carter répartiteur (10) présente un avant-corps (18) vers l'intérieur du véhicule, ledit avant-corps comblant une cavité du tableau de bord (15) par laquelle le carter répartiteur est démontable.

2. Système de chauffage et/ou de climatisation selon la revendication 1, **caractérisé en ce que** l'avant-corps (18) se compose d'éléments moulés sur le carter répartiteur (10).

3. Système de chauffage et/ou de climatisation selon la revendication 1 ou 2, **caractérisé en ce que** l'avant-corps (18) est réalisé comme un dispositif mélangeur d'air.

4. Système de chauffage et/ou de climatisation selon l'une des revendications 1 à 3, **caractérisé en ce que** l'avant-corps (18) est pourvu de tubulures de sortie d'air (19) auxquelles des buses centrales (20) sont directement raccordables.

5. Système de chauffage et/ou de climatisation selon l'une des revendications 1 à 4, **caractérisé en ce que** l'avant-corps (18) est pourvu de tubulures de sortie d'air (21) auxquelles sont raccordables des conduites allant vers le fond du véhicule.

6. Système de chauffage et/ou de climatisation selon l'une des revendications 1 à 5, **caractérisé en ce que** l'avant-corps (18) est pourvu d'au moins un logement (22, 23) pour un instrument (24) ou pour des éléments de commande (25).

7. Système de chauffage et/ou de climatisation selon l'une des revendications 1 à 6, **caractérisé en ce que** l'avant-corps (18) est couvert par un cache (26) recouvrant les interstices entre la cavité du tableau de bord (15) et l'avant-corps (18) du carter répartiteur (10).

8. Système de chauffage et/ou de climatisation selon la revendication 7, **caractérisé en ce que** le cache (26) est réalisé comme une console centrale.

9. Système de chauffage et/ou de climatisation selon l'une des revendications 1 à 8, **caractérisé en ce que** l'avant-corps (18) est pourvu de connexions électriques à fiche (36, 37), sur lesquelles peuvent être branchées les fiches d'un instrument (24) ou d'un élément de commande (25).

10. Système de chauffage et/ou de climatisation selon l'une des revendications 1 à 9, **caractérisé en ce que** le carter répartiteur (10) et l'avant-corps (18) sont formés de pièces moulées par injection assemblées, composées de deux pièces latérales (28, 30) et d'une pièce centrale (29).
